# EUROPEAN PATENT APPLICATION

(11) **EP 3 567 418 A1**
(43) Date of publication of application: **13.11.2019**
(21) Application number: 18736386.6
(22) Date of filing: 05.01.2018
(51) Int. Cl.: G02C 5/22

(54) **HINGE MECHANISM FOR SPECTACLES**

(30) Priority: 05.01.2017 ES 201730007 U
(71) Applicant: Roundten Limited, Central, Hong Kong 3905 (CN); Ricart Gisbert, Ivan, 08629 Barcelona (ES)
(72) Inventor: RICART GISBERT, Ivan, 08629 Barcelona (ES)
(74) Representative: Diaz Nunez, Joaquin
(86) International application number: PCT/ES2018/070008
(87) International publication number: WO 2018/127619

(57) **Abstract**

HINGE MECHANISM FOR GLASSES, with terminations (2), in lateral of the frontal (3), provided with receptions (23, 24) and flexible ends (4) in trident in the temples with insertions (44, 45), a coupling connector (5) for mobile and flexible union that is assembled to the above mentioned terminations (2). The flexible terminations (2) have a distal loop (22) with a window (23) with a trident insert (45). The trident of the flexible ends (4) of the temples is composed of a central tab (41) and two parallel extensions (42), upper and lower, turned ninety degrees, separated by intermediate spaces (43). The coupling connector (5) has a lateral opening (51) longitudinal for reception and insertion of the terminations (2), a transverse gap (52) that coincides with the window (23) suitable for receiving the central tab (41) of the flexible ends (4) of the temples.

## Description

### SUBJECT OF THE INVENTION

The invention, as expressed in the statement of this descriptive report, refers to a hinge mechanism for glasses, which provides structural and constitutive features, to be described in detail below, which represent an improvement of the current state of the art within its field of application.

More particularly, the object of the invention is focused on a hinge mechanism for glasses, whose purpose is to ensure movement between the temples and the front of the frame, to guarantee lasting attachment between both elements in both the open and closed positions and to provide a certain flexibility of the temples in their open position, all by means of an extremely simple structural configuration, free of complexities for its manufacture and with coupling by fitting of the elements it comprises, avoiding the use of screws.

### SCOPE OF THE INVENTION

The field of application of this invention falls within the industrial sector dedicated to the manufacture of frames for glasses, focusing particularly on the field of hinge mechanisms for the same between the temples and the front.

### BACKGROUND OF THE INVENTION

As a reference to the current state of the art, it should be noted that, although multiple types and models of glasses' frames with different systems and hinge mechanisms for folding their temples are known, at least by the applicant, it is not known that there are any that present technical, structural and constitutive characteristics that are the same or similar to those specifically presented by the one recommended here, as claimed.

### EXPLANATION OF THE INVENTION

The hinge mechanism for glasses that the invention proposes is therefore configured as a novelty within its field of application, with the characteristic details that distinguish it, conveniently included in the final claims that accompany this description.

As noted above, what the invention proposes is a hinge mechanism for spectacle frames made up of a front part, where the glass or lenses are attached, and two temples that articulate between an open position of use, with these temples being in a position perpendicular to the front, and a closed position where the temples are approximately parallel to each other behind the front of the frame. This innovative structural configuration is designed to ensure smooth correct movement between the temples and the front of the frame, to ensure that the two elements are held together in both the open and closed positions, allowing countless actions of movement throughout the life of the glasses to be carried out without detachment or deterioration and, at the same time, providing some flexibility for the temples, in their open position, in relation to the front of the frame, in order to absorb the outward stresses that are usually produced when putting on and taking off the glasses, all this by means of a structural configuration that, advantageously, is of a very simple construction and easy coupling, since this is carried out by fitting the elements that it comprises, avoiding the need for the use of screws.

To this end, and specifically, the mechanism of the invention is essentially configured from terminations that the frame has on both ends of its front, provided with means of reception, some flexible ends in each of the temples that are divided into a trident and provided with means of insertion, and a coupling connector that assembles both elements, i.e. the ends of the front of the frame and the flexible ends of the temples, ensuring the union between them with the possibility of angular movement in the horizontal plane for the opening and closing of the temples.

More specifically, the ends of the front of the frame are bent towards the back of the frame, in a round trip segment in such a way that it determines a loop at its distal point that defines a window, existing, moreover, above and below it, respective slots that join the aforementioned window constitute the aforementioned means of reception.

For their part, the flexible ends of the temples are divided by a trident composed of a central vertical tab, i.e. coplanar to the plane of the rod that forms the temples, and which is perpendicular to the front of the frame, and two horizontal extensions, i.e., parallel to each other and turned ninety degrees to the plane of the central tab, whose distal ends have respective hook formations, suitable for fitting into the slots.

In addition, the central tab, which is approximately the same length as the extensions with said hooks, has a series of zigzag angled folds.

And finally, the coupling connector that assembles the ends of the front of the frame with the flexible ends of the temples with the possibility of angular movement of about 90º for the opening and closing of the temples, is configured from a prismatic body that, on the first end, has a longitudinal lateral opening suitable for the insertion into it of the terminations of the frontal part of the frame, specifically of the distal loop determined by those terminations, and, approximately in its middle zone, has a transverse gap which, after the insertion of the distal loop, coincides with the window which determines it, the opposite end of this body of the connector being blind.

This results in the aforementioned insertion of the distal loop of the ends of the front of the frame into the lateral slot of the connector, while at the same time fitting with the hook formations at the distal ends of the horizontal extensions of the trident flexible ends of the temples, the central tab of said trident of said flexible ends of the temples penetrates through the transverse gap in the middle zone of the coupling connector, and of the distal loop window that determines the platen/platine of the flexible ends of the sides of the front part of the frame that is superimposed coinciding with this gap, locking into it thanks to its zig-zag angled folds, preferably remaining adjusted in a recess in the manner of a longitudinal channel foreseen for this purpose on the front face of the prismatic body that constitutes the coupling connector.

In this way, the coupling connector is able to maintain the union between it and the end of the side ends of both sides of the front of the frame, so that it determines a fixed and firm union, and at the same time, the union between this connector and the trident-shaped flexible end of the temples, so that it determines a mobile flexible union that allows the temples to turn with respect to the front of the frame and also gives a certain degree of flexibility to the temples in their open position.

In view of the above, it can be seen that the described hinge mechanism for glasses represents an innovative structure with structural and constitutive characteristics hitherto unknown for its intended purpose, reasons which, together with its practical usefulness, provide it with sufficient foundation to obtain the privilege of exclusivity requested.

### DESCRIPTION OF THE DRAWINGS

In order to complement the description that is being made and for a better understanding of the characteristics of the invention, this descriptive report is accompanied, as an integral part of it, by a drawing in which the following has been represented with illustrative and not limitative character:
Figure 1.- Shows an exploded perspective view of the hinge mechanism for glasses, object of the invention, where one can appreciate the parts and elements it comprises, as well as the configuration of each.
And the Figure 2.- Shows an elevation view of the hinge mechanism for glasses, according to the invention, shown in figure 1, represented here once its parts and elements are coupled to each other, where one can appreciate the arrangement of each.

### PREFERENTIAL EMBODIMENT OF THE INVENTION

In view of these figures, and in accordance with the numbering adopted, an example can be seen in them of the non-limitative implementation of the hinge mechanism for recommended glasses, which comprises the parts and elements indicated and described in detail below.

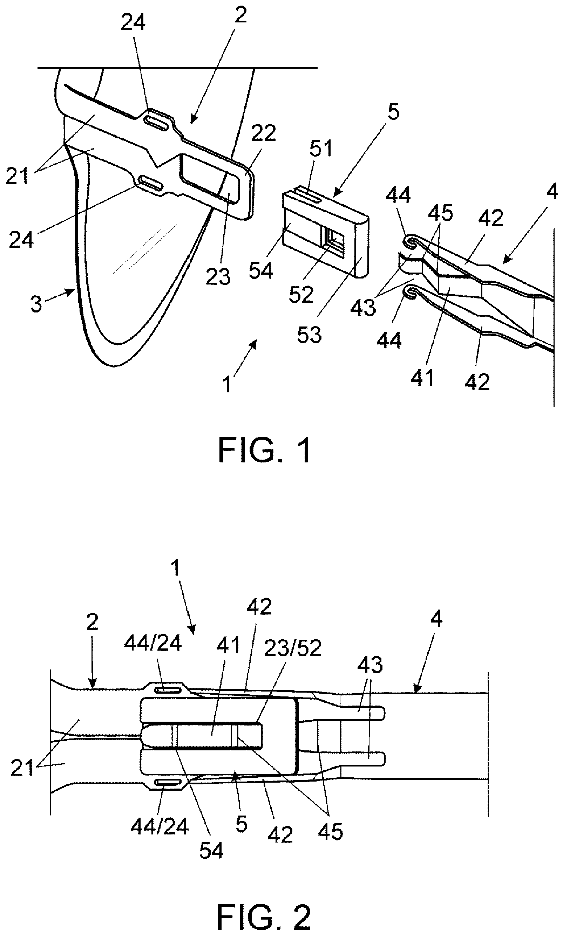

Figure 1 shows how the mechanism (1) in question comprises ends (2), on the respective sides of the front part (3) of the frame, fitted with means of reception (23, 24), flexible ends (4) on the temples divided into tridents, fitted with means of insertion (44, 45), and a coupling connector (5) which is fixedly assembled to the ends (2) of the front part (3) of the frame, and to which they are assembled, with a mobile and flexible union which makes it possible to turn the temples with respect to the front part (3) of the frame, the flexible ends (4) of these temples.

For this purpose, the terminations (2) are formed by a platen (21) that emanates, on each side of the front part (3) of the frame, with a round trip segment that forms a distal loop (22) that defines a window (23) suitable as a means of receiving one of the means of insertion (45) of the trident into which the flexible ends (4) of the temples are divided.

In addition, above and below the platen (21), there are slots (24) drilled, suitable as a means of receiving other means of insertion (44) of the trident into which the flexible ends (4) of the temples are divided.

For this purpose, the trident into which the flexible ends (4) of the temples are divided is composed of a central tab (41), coplanar to the plane of the temples, and two parallel extensions (42), upper and lower, and turned ninety degrees with respect to the plane of the central tab (41), from which they are separated by respective intermediate spaces (43).

The central tab (41), which is approximately the same length as the parallel extensions (42), has a series of zigzag angled folds (45) as insertion means that fit into the window (23) that determines part of the means of receiving the terminations (2), while the distal ends of the parallel extensions (42) have respective hook formations (44) as insertion means in the slots (24) that determine the remaining means of receiving the terminations (2).

Finally, the coupling connector (5) is configured as a prismatic body which, at one end, has a longitudinal lateral opening (51) suitable for the reception and insertion into it of the terminations (2), specifically of the distal loop (22) with the window (23), and which also has a transverse gap (52) to which this lateral opening (51) is opened and which, by assembling the elements of the mechanism (1) as shown in figure 2, coincides with the aforementioned window (23), being suitable for receiving the central tab (41) of the flexible ends (4) of the temples, fitting into them their angled zigzag folds (45).

The opposite end to the side opening (51), the one facing the temple, is blind and, preferably, has a curved-concave surface (53) that facilitates the sliding of the trident components of the flexible end (4) of the temple when turning in the opening movement of the temple.

Preferably, moreover, the front face of this prismatic body which constitutes the coupling connector (5) has a recess (54) in the shape of a longitudinal channel, in which the distal end of the central tab (41) is fitted.

Having sufficiently described the nature of the present invention, as well as the manner of putting it into practice, it is not considered necessary to extend its explanation so that any expert in the field understands its scope and the advantages derived from it, stating that, within its essentiality, it may be put into practice in other embodiments that differ in detail from that indicated by way of example, and to which the protection it requests will equally be attained, provided that its fundamental principle is not altered, changed or modified.

## Claims

1. HINGE MECHANISM FOR GLASSES which, comprising terminations (2), on the respective sides of the front part (3) of the frame, fitted with means of reception (23, 24) and flexible ends (4) on the temples divided into a trident, fitted with means of insertion (44, 45), in order to obtain a mobile and flexible union that makes it possible to turn the temples with respect to the front part (3) of the frame, is **characterized in that** it incorporates a coupling connector (5) that is assembled, in a fixed way, to the ends (2) of the front part (3) of the frame and to which the flexible ends (4) of these temples are assembled, with a mobile and flexible union; where the flexible ends (2) have a distal loop (22) defining a window (23) suitable as a means of receiving one of the means of insertion (45) of the trident into which the flexible ends (4) of the temples are divided; where the trident into which the flexible ends (4) of the temples are divided is composed of a central tab (41), coplanar to the plane of the temples, and two parallel extensions (42), upper and lower, and turned ninety degrees with respect to the plane of the central tab (41), from which they are separated by respective intermediate spaces (43); and where the coupling connector (5) has a longitudinal opening (51) suitable for the reception and insertion into it of the terminations (2), a transverse gap (52) which, when assembling the elements of the mechanism (1), coincides with the window (23) and is suitable for receiving the central tab (41) from the flexible ends (4) of the temples.

2. HINGE MECHANISM FOR GLASSES, according to claim 1, **characterized in that** the terminations (2) are formed by a platen (21) that emanates, on each side of the front part (3) of the frame, with a round trip segment that forms the distal loop (22) that defines the window (23).

3. HINGE MECHANISM FOR GLASSES, according to the previous claims, **characterized in that,** above and below the platen (21), two slots (24) are drilled, suitable as a means of receiving means of insertion (44) of the trident into which the flexible ends (4) of the temples are divided.

4. HINGE MECHANISM FOR GLASSES, according to the previous claims, **characterized in that** the central tab (41) has approximately the same length as the parallel extensions (42).

5. HINGE MECHANISM FOR GLASSES, according to the previous claims, **characterized in that** the central tab (41) has zig-zag angled folds (45) as means of insertion that fit into the window (23) that determines part of the means of receiving the terminations (2), and the distal ends of the parallel extensions (42) have respective hook formations (44) as means of insertion into the slots (24) which determine part of the means of receiving these terminations (2).

6. HINGE MECHANISM FOR GLASSES, according to the above claims, **characterized in that** the coupling connector (5) is configured as a prismatic body which, at one end, has the longitudinal lateral opening (51) suitable for the reception and insertion into it of the distal loop (22) with the window (23), and the transverse opening (52) to which this lateral opening (51) is opened, coinciding with the window (23) and suitable for receiving the central tab (41), fitting into them their angled zigzag folds (45).

7. HINGE MECHANISM FOR GLASSES, according to claim 6, **characterized in that** the opposite end to the lateral opening (51) of the body of the coupling connector (5), which is facing the temple, is blind and has a curved-concave surface (53).

8. HINGE MECHANISM FOR GLASSES, according to claims 6 and 7, **characterized in that** that the front face of the body constituting the coupling connector (5) has a recess (54) in the shape of a longitudinal channel, in which the distal end of the central tab (41) is fitted.
